# EUROPÄISCHE PATENTANMELDUNG

(11) **EP 4 382 733 A1**
(43) Veröffentlichungstag der Anmeldung: **12.06.2024**
(21) Anmeldenummer: 23211684.8
(22) Anmeldetag: 23.11.2023
(51) Int. Cl.: F01N 3/20, F01N 3/28, F01N 13/00

(54) **ABGASBEHANDLUNGSANORDNUNG**

(30) Priorität: 05.12.2022 DE 102022132127
(71) Anmelder: Purem GmbH, 66539 Neunkirchen (DE)
(72) Erfinder: Bräuning, Silas, Denkendorf (DE); Datz, Wolfgang, Tübingen (DE); Henzler, Markus, Grafenberg (DE); Velyaev, Oleksandr, Stuttgart (DE); Wolf, Tobias, Köngen (DE); Wieland, Arthur, Baltmannsweiler (DE)
(74) Vertreter: Ruttensperger Lachnit Trossin Gomoll

(57) **Zusammenfassung**

Eine Abgasbehandlungsanordnung für eine Abgasanlage einer Brennkraftmaschine, insbesondere Diesel-Brennkraftmaschine, umfasst wenigstens eine erste Abgasbehandlungseinheit (68) und stromabwärts der wenigstens einen ersten Abgasbehandlungseinheit (68) wie z.B. ein SCR-Katalysator mit einem ASC-Katalysator, eine Abgasbehandlungsbaugruppe (62) wie z.B. ein Oxidationskatalysator vor einem DPF-Filter, wobei die wenigstens eine erste Abgasbehandlungseinheit (68) und die Abgasbehandlungsbaugruppe (62) in Richtung einer Strömungspfad-Längsachse (L₂) eines die wenigstens eine erste Abgasbehandlungseinheit (68) und die Abgasbehandlungsbaugruppe (62) umfassenden Strömungspfads (14) axial aufeinanderfolgend angeordnet sind, wobei eine Kohlenwasserstoff-Einleitbaugruppe (78) zum Einleiten von Kohlenwasserstoff (K) in in dem Strömungspfad (14) strömendes Abgas (A) vorgesehen ist, wobei die Kohlenwasserstoff-Einleitbaugruppe (78) eine Kohlenwasserstoff-Abgabeeinheit (80) zum Abgeben von Kohlenwasserstoff (K) in den Strömungspfad (14) stromabwärts der wenigstens einen ersten Abgasbehandlungseinheit (68) und stromaufwärts der Abgasbehandlungsbaugruppe (62) und eine Drallstrom-Erzeugungseinheit (82) in dem Strömungspfad (14) stromaufwärts der Kohlenwasserstoff-Abgabeeinheit (80) umfasst. Optional kann nach der Abgasbehandlungsbaugruppe (62) eine Reduktionsmittel-Abgabeeinheit (34) mit einem Mischer (36) und zwei parallelen SCR-Katalysatoren (98,100) folgen.

## Beschreibung

Die vorliegende Erfindung betrifft eine Abgasbehandlungsanordnung für eine Abgasanlage einer Brennkraftmaschine, insbesondere einer Diesel-Brennkraftmaschine.

Zum Erreichen der zulässigen Abgaswerte der von Brennkraftmaschinen, insbesondere Diesel-Brennkraftmaschinen, ausgestoßenen Abgase ist es beispielsweise bekannt, ein Reaktionsmittel, wie zum Beispiel eine Harnstoff/Wasser-Lösung, in das Abgas einzuspritzen, um in einer insbesondere als SCR-Katalysatoreinheit ausgebildeten Abgasbehandlungseinheit den Stickoxidanteil zu senken. Auch ist es bekannt, verschiedene Arten von Katalysatoren, wie zum Beispiel SCR-Katalysatoreinheiten und Oxidationskatalysatoreinheiten, in einer derartigen Abgasbehandlungsanordnung zu kombinieren, um eine möglichst effiziente Minderung des Schadstoffanteils in dem zur Umgebung ausgestoßenen Abgas zu erreichen.

Für die in verschiedenen Systembereichen einer derartigen Abgasbehandlungsanordnung durchzuführenden katalytischen Reaktionen ist es erforderlich, dass die hierfür wirksamen Katalysatormaterialien eine ausreichend hohe Temperatur aufweisen. Da insbesondere in Startphasen des Arbeitsbetriebs einer Brennkraftmaschine oder bei vergleichsweise niedrigen Umgebungstemperaturen die im Abgas transportierte Wärme oftmals nicht ausreichend ist, um eine für die durchzuführenden katalytischen Reaktionen ausreichend hohe Temperatur schnell zu erreichen bzw. zuverlässig aufrecht zu erhalten, ist es beispielsweise bekannt, elektrisch betriebene Abgasheizer in eine Abgasanlage zu integrieren, um auf das von einer Brennkraftmaschine ausgestoßene Abgas oder ein anderes in die Abgasanlage eingeleitetes Gas stromaufwärts eines oder mehrerer katalytisch wirksamer Systembereiche Wärme zu übertragen, die dann durch das Abgas bzw. Gas zu dem bzw. den katalytisch wirksamen Systembereichen transportiert und auf diese übertragen wird.

Es ist die Aufgabe der vorliegenden Erfindung, eine Abgasbehandlungsanordnung für eine Abgasanlage einer Brennkraftmaschine, insbesondere Diesel-Brennkraftmaschine, vorzusehen, mit welcher bei baulich einfacher und kompakter Ausgestaltung eine zuverlässige Erwärmung von zur Abgasbehandlung vorgesehenen Systembereichen gewährleistet werden kann.

Erfindungsgemäß wird diese Aufgabe gelöst durch eine Abgasbehandlungsanordnung für eine Abgasanlage einer Brennkraftmaschine, insbesondere Diesel-Brennkraftmaschine, umfassend wenigstens eine erste Abgasbehandlungseinheit und stromabwärts der wenigstens einen ersten Abgasbehandlungseinheit, eine Abgasbehandlungsbaugruppe, wobei die wenigstens eine erste Abgasbehandlungseinheit und die Abgasbehandlungsbaugruppe in Richtung einer Strömungspfad-Längsachse eines die wenigstens eine erste Abgasbehandlungseinheit und die Abgasbehandlungsbaugruppe umfassenden Strömungspfads axial aufeinander folgend angeordnet sind, wobei eine Kohlenwasserstoff-Einleitbaugruppe zum Einleiten von Kohlenwasserstoff in in dem Strömungspfad strömendes Abgas vorgesehen ist, wobei die Kohlenwasserstoff-Einleitbaugruppe eine Kohlenwasserstoff-Abgabeeinheit zum Abgeben von Kohlenwasserstoff in den Strömungspfad stromabwärts der wenigstens einen ersten Abgasbehandlungseinheit und stromaufwärts der Abgasbehandlungsbaugruppe und eine Drallstrom-Erzeugungseinheit in dem Strömungspfad stromaufwärts der Kohlenwasserstoff-Abgabeeinheit umfasst.

Durch das Bereitstellen der erfindungsgemäß aufgebauten Kohlenwasserstoff-Einleitbaugruppe wird die Möglichkeit geschaffen, bei seiner Oxidation Wärme freisetzenden und somit zur Erwärmung von zur Abgasbehandlung vorgesehenen Systembereichen beitragenden Kohlenwasserstoff, also beispielsweise den auch einer Brennkraftmaschine zuzuführenden Kraftstoff, in den Abgasstrom einzuleiten und effizient mit Abgas zu durchmischen. Zur effizienten Durchmischung von Abgas und Wasserstrom trägt insbesondere die im Strömungspfad stromaufwärts des Ortes der Einleitung des Kohlenwasserstoffs in den Strömungspfad positionierte Drallstrom-Erzeugungseinheit bei, welche auf den im Strömungspfad strömenden Abgasstrom eine Umfangs-Strömungsrichtungskomponente überträgt, so dass einer im Wesentlichen in Richtung der Strömungspfad-Längsachse orientierten Abgas-Hauptströmungsrichtung im Strömungspfad eine Strömungsrichtungskomponente in Umfangsrichtung überlagert wird. Dies führt zu Verwirbelungen und grundsätzlich einem längeren Strömungsweg zwischen der wenigstens einen ersten Abgasbehandlungseinheit und der Abgasbehandlungsbaugruppe, welcher zur Durchmischung von Abgas und Kohlenwasserstoff zur Verfügung steht und genutzt wird.

Die Kohlenwasserstoff-Abgabeeinheit kann an einem Strömungspfadgehäuse axial zwischen einem Austrittsbereich der wenigstens einen ersten Abgasbehandlungseinheit und einem Eintrittsbereich der Abgasbehandlungsbaugruppe getragen sein, so dass die Kohlenwasserstoff-Abgabeeinheit in der Abgasbehandlungsanordnung untergebracht werden kann, ohne grundsätzlich über deren Außenkontur hervorzustehen.

Zur weiteren Unterstützung der effizienten Durchmischung von Abgas und Kohlenwasserstoff kann die Kohlenwasserstoff-Abgabeeinheit zur Abgabe von Kohlenwasserstoff mit einer zur Strömungspfad-Längsachse im Wesentlichen orthogonalen oder einer bezüglich der Strömungspfad-Längsachse im Wesentlichen tangential orientierten Haupt-Abgaberichtung angeordnet sein.

Zur Erzeugung der Drallströmung kann die Drallstrom-Erzeugungseinheit eine Mehrzahl von Strömungsablenkelementen umfassen.

Dabei können für eine effiziente und kompakte Ausgestaltung der Drallstrom-Erzeugungseinheit die Strömungsablenkelemente in Umfangsrichtung um die Strömungspfad-Längsachse aufeinander folgend angeordnet sein oder/und bezüglich der Strömungspfad-Längsachse sich im Wesentlichen radial erstreckend angeordnet sein oder/und in einer sternartigen Konfiguration angeordnet sein.

Für eine stabile Ausgestaltung kann vorgesehen sein, dass die Drallstrom-Erzeugungseinheit einen an dem Strömungspfad getragenen, ringartigen Körper umfasst und die Strömungsablenkelemente in ihrem radial äußeren Endbereich an den ringartigen Körper anschließen, oder/und dass die Strömungsablenkelemente in ihrem radial inneren Endbereich aneinander anschließen, oder/und dass die Drallstrom-Erzeugungseinheit als Blechumformteil ausgebildet ist.

Für eine insbesondere in axialer Richtung kompakte Ausgestaltung der Abgasbehandlungsanordnung kann die Drallstrom-Erzeugungseinheit an einem Austrittsbereich der wenigstens einen ersten Abgasbehandlungseinheit angeordnet sein.

Zur weiteren Minderung des in dem von einer Brennkraftmaschine ausgestoßenen Abgas enthaltenen Schadstoffanteils kann stromabwärts der Abgasbehandlungsbaugruppe wenigstens eine zweite Abgasbehandlungseinheit angeordnet sein.

Um in der wenigstens einen zweiten Abgasbehandlungseinheit eine katalytische Reinigungsreaktion effizient durchführen zu können, kann stromabwärts der Abgasbehandlungsbaugruppe und stromaufwärts der wenigstens einen zweiten Abgasbehandlungseinheit eine Abgas/Reaktionsmittel-Mischstrecke mit einem im Wesentlichen in Richtung einer Mischstrecken-Längsachse langgestreckten Mischkanal und einer Reaktionsmittel-Abgabeeinheit zum Abgeben von Reaktionsmittel in den Mischkanal vorgesehen sein.

Für eine kompakte Ausgestaltung der Abgasbehandlungsanordnung wird vorgeschlagen, dass die Mischstrecken-Längsachse im Wesentlichen parallel zur Strömungspfad-Längsachse ist, oder/und dass der Strömungspfad und die Abgas/Reaktionsmittel-Mischstrecke einander in axialer Richtung im Wesentlichen vollständig überlappen, so dass ein Eintrittsbereich der Abgas/Reaktionsmittel-Mischstrecke in Richtung der Mischstrecken-Längsachse im Wesentlichen im gleichen axialen Bereich positioniert ist, wie ein Austrittsbereich der Abgasbehandlungsbaugruppe, und ein Austrittsbereich der Abgas/Reaktionsmittel-Mischstrecke in Richtung der Mischstrecken-Längsachse im Wesentlichen im gleichen axialen Bereich positioniert ist, wie ein Eintrittsbereich der wenigstens einen ersten Abgasbehandlungseinheit.

Eine effiziente Ausnutzung des für die Abgasbehandlungsanordnung bereitgestellten Bauvolumens kann erreicht werden, wenn eine Abgas-Hauptströmungsrichtung im Mischkanal im Wesentlichen entgegengesetzt gerichtet ist zu einer Abgas-Hauptströmungsrichtung im Strömungspfad.

Weiter kann hierfür die wenigstens eine zweite Abgasbehandlungseinheit in Richtung einer zur Strömungspfad-Längsachse im Wesentlichen parallelen Abgasbehandlungseinheit-Längsachse langgestreckt sein und im Wesentlichen in Richtung der Abgasbehandlungseinheit-Längsachse durchströmbar sein, und die wenigstens eine zweite Abgasbehandlungseinheit und die Abgas/Reaktionsmittel-Mischstrecke können einander in axialer Richtung im Wesentlichen vollständig überlappen, so dass der Eintrittsbereich der Abgas/Reaktionsmittel-Mischstrecke in Richtung der Mischstrecken-Längsachse im Wesentlichen im gleichen axialen Bereich positioniert ist, wie ein Austrittsbereich der wenigstens einen zweiten Abgasbehandlungseinheit, und der Austrittsbereich der Abgas/Reaktionsmittel-Mischstrecke in Richtung der Mischstrecken-Längsachse im Wesentlichen im gleichen axialen Bereich positioniert ist, wie ein Eintrittsbereich der wenigstens einen zweiten Abgasbehandlungseinheit.

Zum Bereitstellen einer Strömungsverbindung kann der Eintrittsbereich der Abgas/Reaktionsmittel-Mischstrecke über ein erstes Strömungsumlenkgehäuse mit dem Austrittsbereich der Abgasbehandlungsbaugruppe verbunden sein, und der Austrittsbereich der Abgas/Reaktionsmittel-Mischstrecke kann über ein zweites Strömungsumlenkgehäuse mit dem Eintrittsbereich der wenigstens einen zweiten Abgasbehandlungseinheit verbunden sein.

Für eine Erhöhung der Abgasbehandlungseffizienz bei kompakter Bauart können wenigstens zwei zueinander parallel durchströmbare zweite Abgasbehandlungseinheiten quer zur Abgasbehandlungseinheit-Längsachse nebeneinander und einander in Richtung der Abgasbehandlungseinheit-Längsachse im Wesentlichen vollständig überlappend vorgesehen sein.

Wenigstens eine Abgasbehandlungseinheit kann wenigstens eine SCR-Katalysatoreinheit oder/und wenigstens eine Ammoniaksperrkatalysatoreinheit umfassen. Weiter kann die Abgasbehandlungsbaugruppe eine Oxidationskatalysatoreinheit oder/und eine Partikelfiltereinheit umfassen.

Zur über den Querschnitt der Abgasbehandlungsbaugruppe möglichst gleichmäßigen Einleitung von mit Kohlenwasserstoff durchmischtem Abgas kann im Strömungspfad stromabwärts der Kohlenwasserstoff-Abgabeeinheit und stromaufwärts der Abgasbehandlungsbaugruppe ein Strömungsverteilungselement angeordnet sein.

Das Strömungsverteilungselement kann beispielsweise als Blechformteil plattenartig ausgebildet sein und einen Eintrittsbereich der Abgasbehandlungsbaugruppe im Wesentlichen vollständig überdecken. In dem Strömungsverteilungselement kann eine Vielzahl von Strömungsdurchtrittsöffnungen vorgesehen sein. Diese Strömungsdurchtrittsöffnungen können für eine gleichmäßige Einleitung von Abgas bzw. Kohlenwasserstoff in die Abgasbehandlungsbaugruppe mit im Wesentlichen gleichem Querschnitt ausgebildet und über das Strömungsverteilungselement im Wesentlichen gleichmäßig verteilt sein.

Die Erfindung betrifft ferner eine Abgasanlage für eine Brennkraftmaschine, insbesondere Diesel-Brennkraftmaschine, umfassend wenigstens eine erfindungsgemäß aufgebaute Abgasbehandlungsanordnung.

Die vorliegende Erfindung wird nachfolgend mit Bezug auf die beiliegenden Figuren detailliert beschrieben. Es zeigt:
- Fig. 1: eine teilweise offen dargestellte Seitenansicht einer Abgasbehandlungseinheit für eine Brennkraftmaschine;
- Fig. 2: in prinzipartiger und abgewickelter Darstellung die in Strömungsrichtung aufeinander folgenden und einander im Wesentlichen axial überlappenden Systembereiche der Abgasbehandlungsanordnung der Fig. 1;
- Fig. 3: eine Prinzip-Querschnittansicht der Abgasbehandlungsanordnung der Fig. 1, geschnitten längs einer Linie III-III in Fig. 1;
- Fig. 4: eine perspektivische Querschnittansicht der Abgasbehandlungsanordnung der Fig. 1, geschnitten längs einer Linie IV-IV in Fig. 1 .

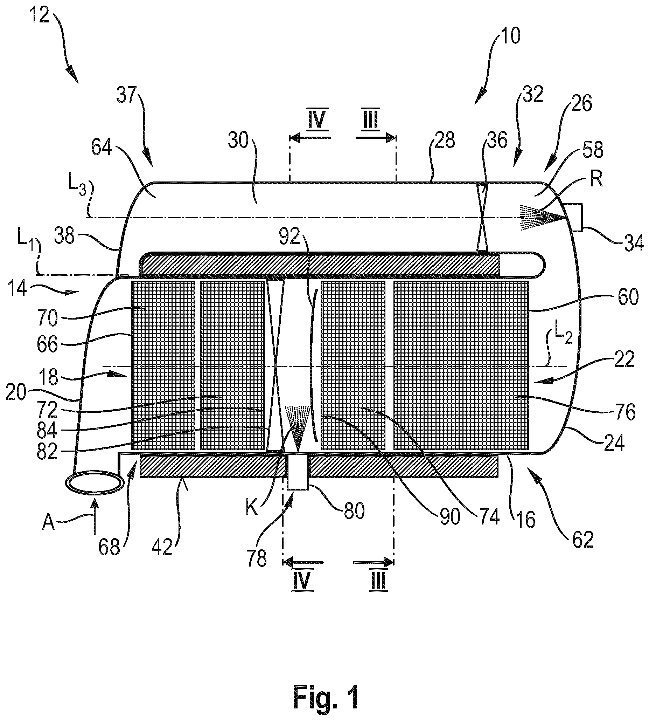

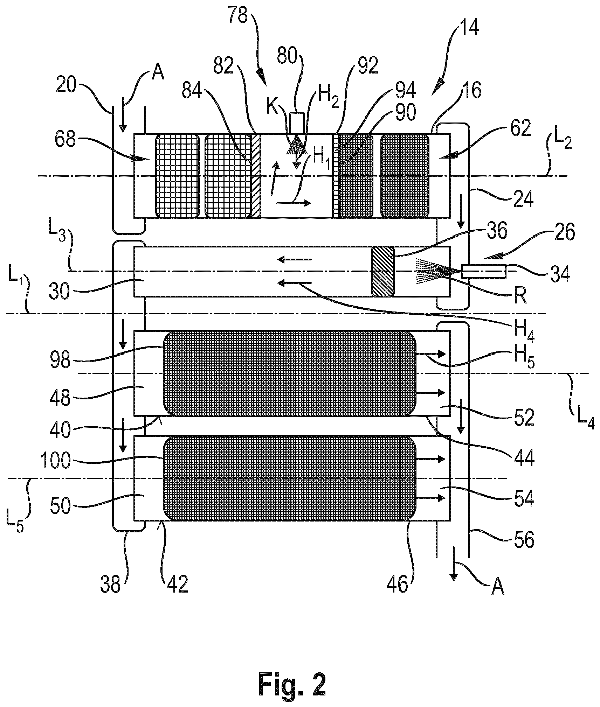

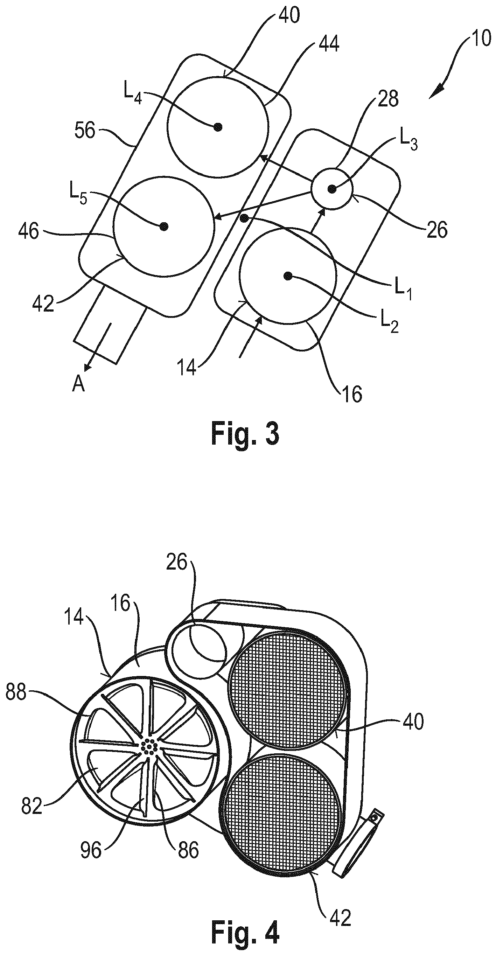

In Fig. 1 ist eine Abgasbehandlungsanordnung 10 für eine Abgasanlage 12 insbesondere für eine Diesel-Brennkraftmaschine in Seitenansicht zu erkennen. Eine derartige Abgasbehandlungsanordnung 10 kann beispielsweise in einer Abgasanlage 12 eines Nutzkraftfahrzeugs bzw. eines Lastkraftwagens vorgesehen sein. In den Fig. 2 und 3 ist die Abgasbehandlungsanordnung 10 in prinzipieller Ansicht dargestellt, wobei die Fig. 2 eine Umfangsabwicklung der grundsätzlich in Richtung einer Abgasbehandlungsanordnung-Längsachse L₁ langgestreckten Abgasbehandlungsanordnung 10 dargestellt ist.

Die Abgasbehandlungsanordnung 10 umfasst einen allgemein mit 14 bezeichneten und in Richtung einer Strömungspfad-Längsachse L₂ langgestreckten Strömungspfad mit einem einstückigen oder aus mehreren Teilen zusammengesetzten, im Wesentlichen rohrartigen Strömungspfadgehäuse 16. An einem stromaufwärtigen Endbereich 18 des Strömungspfads 14 schließt ein Einleitgehäuse 20 an das Strömungspfadgehäuse 16 an. Über das Einleitgehäuse 20 wird von einer Brennkraftmaschine ausgestoßenes Abgas A in die Abgasbehandlungsanordnung 10 bzw. den Strömungspfad 14 eingeleitet. In einem stromabwärtigen Endbereich 22 des Strömungspfads 14 schließt ein erstes Umlenkgehäuse 24 an das Strömungspfadgehäuse 16 an. Im ersten Umlenkgehäuse 24 wird das den Strömungspfad 14 durchströmende bzw. aus diesem austretende Abgas A um etwa 180° umgelenkt und in eine Abgas/Reaktionsmittel-Mischstrecke 26 eingeleitet. Die Abgas/Reaktionsmittel-Mischstrecke 26 umfasst in einem rohrartigen Mischstreckengehäuse 28 einen in Richtung einer Mischstrecken-Längsachse L₃ langgestreckten Mischkanal 30. An einem stromaufwärtigen Endbereich 32 der Abgas/Reaktionsmittel-Mischstrecke 26 ist, beispielsweise getragen am ersten Umlenkgehäuse 24, eine allgemein auch als Injektor bezeichnete Reaktionsmittel-Abgabeeinheit 34 vorgesehen, durch welche ein Reaktionsmittel R, beispielsweise eine Harnstoff/Wasser-Lösung, in den Mischkanal 30 eingespritzt wird. Zum Unterstützen der Durchmischung von Abgas A und Reaktionsmittel R kann in dem Mischstreckengehäuse 28 ein beispielsweise eine Mehrzahl von Ablenkschaufeln oder dergleichen umfassender Mischer 36 angeordnet sein.

In einem stromabwärtigen Endbereich 37 der Abgas/Reaktionsmittel-Mischstrecke 26 schließt das Mischstreckengehäuse 28 an ein zweites Umlenkgehäuse 38 an. Im zweiten Umlenkgehäuse 38 findet erneut eine Umlenkung des Abgasstroms um etwa 180° statt. Über das zweite Umlenkgehäuse 38 wird das Abgas im dargestellten Ausgestaltungsbeispiel in zwei zueinander parallel durchströmbare zweite Abgasbehandlungseinheiten 40, 42 eingeleitet. Jede der zweiten Abgasbehandlungseinheiten 40, 42 umfasst ein rohrartiges und in Richtung einer jeweiligen Abgasbehandlungseinheit-Längsachse L₄, L₅ langgestrecktes Abgasbehandlungseinheitgehäuse 44, 46. Ein jeweiliger stromaufwärtiger Endbereich der Abgasbehandlungseinheitgehäuse 44, 46 stellt einen jeweiligen Eintrittsbereich 48, 50 der zweiten Abgasbehandlungseinheiten 40, 42 bereit, und ein jeweiliger stromabwärtiger Endbereich der Abgasbehandlungseinheitgehäuse 44, 46 stellt einen jeweiligen Austrittsbereich 52, 54 der zweiten Abgasbehandlungseinheiten 40, 42 bereit. Diese sind zu einem Ableitgehäuse 56 offen, über welches das in der Abgasbehandlungsanordnung 10 behandelte Abgas A die Abgasbehandlungsanordnung 10 zu weiteren Systembereichen der Abgasanlage 12, beispielsweise einem oder mehreren Schalldämpfer oder dergleichen, verlässt.

Die Fig. 1 und 3 zeigen, dass in der Abgasbehandlungsanordnung 10 der Strömungspfad 14, die Abgas/Reaktionsmittel-Mischstrecke 26 und die zweiten Abgasbehandlungseinheiten 40, 42 derart positioniert sind, dass deren Längsachsen L₂, L₃, L₄, L₅ zueinander und zur Abgasbehandlungsanordnung-Längsachse L₁ im Wesentlichen parallel sind und dass sie sich in axialer Richtung im Wesentlichen vollständig überlappen. Dies bedeutet, dass ein Eintrittsbereich 58 der Abgas/Reaktionsmittel-Mischstrecke 26 im Wesentlichen im gleichen axialen Bereich liegt, wie ein Austrittsbereich 60 einer im Strömungspfad 14 angeordneten Abgasbehandlungsbaugruppe 62, und dass ein Austrittsbereich 64 der Abgas/Reaktionsmittel-Mischstrecke 26 im Wesentlichen im gleichen axialen Bereich liegt wie ein Eintrittsbereich 66 einer im Strömungspfad 14 angeordneten ersten Abgasbehandlungseinheit 68. Gleichermaßen liegt der Austrittsbereich 64 der Abgas/Reaktionsmittel-Mischstrecke 26 im Wesentlichen im gleichen axialen Bereich, wie die Eintrittsbereiche 48, 50 der zweiten Abgasbehandlungseinheiten 40, 42, während der Eintrittsbereich 58 der Abgas/Reaktionsmittel-Mischstrecke 26 im Wesentlichen im gleichen axialen Bereich liegt, wie die Austrittsbereiche 52, 54 der zweiten Abgasbehandlungseinheiten 40, 42.

Die im Strömungspfad 14 bzw. im Strömungspfadgehäuse 16 angeordnete erste Abgasbehandlungseinheit 68 umfasst im dargestellten Ausgestaltungsbeispiel in Strömungsrichtung bzw. axial in Richtung der Strömungspfad-Längsachse L₂ aufeinander folgend eine SCR-Katalysatoreinheit 70 und eine Ammoniaksperrkatalysatoreinheit 72. Das über das Einleitgehäuse 20 in den Strömungspfad 14 eingeleitete Abgas A durchströmt die beiden Katalysatoreinheiten 70, 72 der ersten Abgasbehandlungseinheit 68 im Wesentlichen in einer Abgas-Hauptströmungsrichtung H₁ im Strömungspfad 14, wobei die Abgas-Hauptströmungsrichtung H₁ im Strömungspfad 14 im Wesentlichen parallel zur Strömungspfad-Längsachse L₂ orientiert ist. Selbstverständlich können von dieser Abgas-Hauptströmungsrichtung H₁ abweichende Strömungsrichtungskomponenten vorhanden sein, beispielsweise in Bereichen, in welchen Verwirbelungen oder Turbulenzen auftreten. In der Abgasanlage 12 kann stromaufwärts der Abgasbehandlungsanordnung 10 bzw. der SCR-Katalysatoreinheit 70 eine weitere Reaktionsmittel-Abgabeeinheit angeordnet sein, um stromaufwärts der SCR-Katalysatoreinheit 70 ein Reaktionsmittel, beispielsweise eine Harnstoff/WasserLösung, in den Abgasstrom einzuleiten.

Stromabwärts der beiden Katalysatoreinheiten 70, 72 der ersten Abgasbehandlungseinheit 68 sind in Strömungsrichtung aufeinander folgend ein Oxidationskatalysatoreinheit 74, insbesondere Diesel-Oxidationskatalysatoreinheit, und eine Partikelfiltereinheit 76 der Abgasbehandlungsbaugruppe 62 angeordnet. Das den Strömungspfad 14 durchströmende Abgas A strömt im Wesentlichen in der Abgas-Hauptströmungsrichtung H₁ zunächst durch die Oxidationskatalysatoreinheit 74 und dann die Partikelfiltereinheit 76, bevor es durch das erste Umlenkgehäuse 24 in Richtung zur Abgas/Reaktionsmittel-Mischstrecke 26 umgelenkt wird.

Es ist darauf hinzuweisen, dass bei der Abgasbehandlungsanordnung 10 sowohl die erste Abgasbehandlungseinheit 68, als auch die Abgasbehandlungsbaugruppe 62 anders aufgebaut sein können, als im dargestellten Ausgestaltungsbeispiel. So könnte beispielsweise die erste Abgasbehandlungseinheit 68 nur die SCR-Katalysatoreinheit 70 umfassen. Die Abgasbehandlungsbaugruppe 62 könnte beispielsweise nur die Oxidationskatalysatoreinheit 76 umfassen.

Die Abgasbehandlungsanordnung 10 umfasst in Zuordnung zum Strömungspfad eine allgemein mit 78 bezeichnete Kohlenwasserstoff-Einleitbaugruppe. Diese umfasst eine Kohlenwasserstoff-Abgabeeinheit 80, allgemein auch als Injektor bezeichnet, welche am Strömungspfadgehäuse 16 axial zwischen der wenigstens einen ersten Abgasbehandlungseinheit 68 und der Abgasbehandlungsbaugruppe 62 positioniert ist.

Die Wasserstoff-Abgabeeinheit 80 gibt Kohlenwasserstoff K, beispielsweise den auch in einer Brennkraftmaschine verwendeten Kraftstoff, in Form eines Sprühnebels bzw. in Tröpfchenform in den Strömungspfad 14 in einen Bereich stromabwärts der wenigstens einen ersten Abgasbehandlungseinheit 68 und stromaufwärts der Abgasbehandlungsbaugruppe 62 ein. Dabei kann der Kohlenwasserstoff K mit einer in Fig. 2 erkennbaren Haupt-Abgaberichtung H₂ in den Strömungspfad 14 eingeleitet werden, welche zur Strömungspfad-Längsachse L₂ im Wesentlichen orthogonal bzw. tangential orientiert ist, also eine Umfangsorientierungskomponente aufweisen kann.

Die Kohlenwasserstoff-Einleitbaugruppe 78 umfasst ferner stromabwärts der ersten Abgasbehandlungseinheit 68, insbesondere einen Austrittsbereich 84 derselben überdeckend, eine Drallstrom-Erzeugungseinheit 82. Diese in Fig. 4 erkennbare Drallstrom-Erzeugungseinheit 82 kann beispielsweise als Blechumformteil ausgebildet sein und eine Mehrzahl bezüglich der Strömungspfad-Längsachse L₂ im Wesentlichen radial sich erstreckender Strömungsablenkelemente 86 umfassen. Die Strömungsablenkelemente 86 können in der Drallstrom-Erzeugungseinheit 82 als axiale Ausformungen ausgebildet sein, zwischen welchen im Wesentlichen radial sich erstreckende, beispielsweise schlitzartige Öffnungen 96 gebildet sind. Im Bereich dieser Öffnungen 96 kann das die erste Abgasbehandlungseinheit 68 durchströmende Abgas in den Bereich des Strömungspfads 14 strömen, in welchem der Kohlenwasserstoff K eingeleitet wird. In einem radial äußeren Bereich schließen die Strömungsablenkelemente 86 an einen ringartigen Körper 90 der Drallstrom-Erzeugungseinheit 82 an, mit welchem diese beispielsweise am Innenumfang des Strömungspfadgehäuses 16 bzw. am stromabwärtigen Ende der wenigstens einen ersten Abgasbehandlungseinheit 68 getragen sein kann. Radial innen schließen die Strömungsablenkelemente 86 aneinander an, so dass eine grundsätzlich sehr stabile Struktur der beispielsweise als Blechumformteil ausgebildeten Drallstrom-Erzeugungseinheit 82 erhalten wird.

Die Strömungsablenkelemente 86 stellen bezüglich der Strömungspfad-Längsachse L₂ angestellte Ablenkflächen bereit, welche das im Wesentlichen in der Abgas-Hauptströmungsrichtung H₁ aus der ersten Abgasbehandlungseinheit 68 austretende Abgas in Umfangsrichtung ablenken, so dass dieses eine der Abgas-Hauptströmungsrichtung H₁ überlagerte Umfangsströmungsrichtungskomponente aufweist. In diese Drallströmung des Abgases A wird durch die Kohlenwasserstoff-Abgabeeinheit 80 der Kohlenwasserstoff K eingespritzt und somit von der Drallströmung zur Strömung in Umfangsrichtung bzw. auch in axialer Richtung mitgenommen. Dadurch wird eine effiziente Durchmischung von Kohlenwasserstoff K und Abgas A im Strömungspfad in dem Volumenbereich zwischen dem Austrittsbereich 84 der ersten Abgasbehandlungseinheit 68 und einem Eintrittsbereich 90 der Abgasbehandlungsbaugruppe 62 erreicht.

Um eine möglichst gleichmäßige Einleitung des mit Kohlenwasserstoff K durchsetzten Abgases A in die Abgasbehandlungsbaugruppe 62, insbesondere die Oxidationskatalysatoreinheit 74, zu erreichen, ist stromaufwärts der Abgasbehandlungsbaugruppe 62 einen Eintrittsbereich 90 derselben im Wesentlichen vollständig überdeckend ein plattenartiges Strömungsverteilungselement 92 angeordnet. Dieses beispielsweise als Blechformteil ausgebildete Strömungsverteilungselement 92 ist perforiert, weist also eine Vielzahl von Strömungsdurchtrittsöffnungen 94 auf, durch welche das Gemisch aus Abgas A und Kohlenwasserstoff K in die Abgasbehandlungsbaugruppe 62, insbesondere die Oxidationskatalysatoreinheit 74, eintritt. Die Strömungsdurchtrittsöffnungen 94 sind über die Oberfläche des Strömungsverteilungselements 92 im Wesentlichen gleichmäßig verteilt und weisen zueinander im Wesentlichen gleiche Öffnungsquerschnitte auf.

Durch Oxidation des im Abgas A transportierten Kohlenwasserstoffs K in der Oxidationskatalysatoreinheit 76 wird Wärme freigesetzt, welche einerseits zu einer Erwärmung der Oxidationskatalysatoreinheit 76 beiträgt und somit dafür sorgt, dass diese schnell auf eine für die katalytische Reaktion erforderliche Betriebstemperatur gebracht wird bzw. effizient bei dieser Temperatur gehalten wird. Andererseits kann ein Teil dieser Wärme durch das die Oxidationskatalysatoreinheit 76 durchströmende Abgas in Richtung zu den nachfolgenden Systembereichen, insbesondere der Abgas/Reaktionsmittel-Mischstrecke 26 und den zweiten Abgasbehandlungseinheiten 40, 42, getragen werden. In der Abgas/Reaktionsmittel-Mischstrecke 26 kann dies zu einer verstärkten Verdampfung des in flüssiger Form eingespritzten Reaktionsmittels R beitragen. In den zweiten Abgasbehandlungseinheiten 40, 42 können jeweilige SCR-Katalysatoreinheiten 98, 100 derselben effizient erwärmt werden und schneller auf die für die SCR-Reaktion erforderliche Temperatur gebracht werden bzw. auf dieser Temperatur gehalten werden.

Mit dem erfindungsgemäßen Aufbau einer Abgasbehandlungsanordnung wird einerseits durch die Beimengung von Kohlenwasserstoff in den Abgasstrom und andererseits durch eine effiziente Durchmischung des Kohlenwasserstoffs mit dem in der Abgasbehandlungsanordnung strömenden Abgas dafür gesorgt, dass durch Oxidation des Kohlenwasserstoffs über eine große Fläche verteilt im Wesentlichen gleichförmig Wärme freigesetzt werden kann, welche zur Erwärmung verschiedener zur Durchführung katalytischer Reaktionen vorgesehener Systembereiche der Abgasbehandlungsanordnung 10 nutzbar ist. Durch die Integration der Kohlenwasserstoff-Einleitbaugruppe in den Strömungspfad in der vorangehend beschriebenen Art und Weise wird eine kompakte Ausgestaltung der Abgasbehandlungsanordnung erreicht bzw. beibehalten, bei welcher das Strömungsprinzip gewährleistet ist, das die Abgas-Hauptströmungsrichtung H₁ in dem auch die Kohlenwasserstoff-Einleitbaugruppe umfassenden Strömungspfad im Wesentlichen entgegengesetzt gerichtet ist zu einer Abgas-Hauptströmungsrichtung H₄ in der Abgas/Reaktionsmittel-Mischstrecke, während eine Abgas-Hauptströmungsrichtung H₅ in den zweiten Abgasbehandlungseinheiten zur Abgas-Hauptströmungsrichtung H₁ im Strömungspfad gleichgerichtet, zur Abgas-Hauptströmungsrichtung H₄ in der Abgas/Reaktionsmittel-Mischstrecke jedoch entgegengesetzt gerichtet ist. Damit kann gewährleistet werden, dass bei axial sehr kompakter Bauart aufgrund der Einleitung von Kohlenwasserstoff und aufgrund der effizienten Durchmischung des Kohlenwasserstoffs mit dem Abgas die gesetzlichen Grenzwerte für Schadstoffanteile im Abgas unter verschiedensten Betriebsumständen einer Brennkraftmaschine bzw. der Abgasanlage erreicht bzw. beibehalten werden können.

## Patentansprüche

1. Abgasbehandlungsanordnung für eine Abgasanlage einer Brennkraftmaschine, insbesondere Diesel-Brennkraftmaschine, umfassend wenigstens eine erste Abgasbehandlungseinheit (68) und stromabwärts der wenigstens einen ersten Abgasbehandlungseinheit (68), eine Abgasbehandlungsbaugruppe (62), wobei die wenigstens eine erste Abgasbehandlungseinheit (68) und die Abgasbehandlungsbaugruppe (62) in Richtung einer Strömungspfad-Längsachse (L₂) eines die wenigstens eine erste Abgasbehandlungseinheit (68) und die Abgasbehandlungsbaugruppe (62) umfassenden Strömungspfads (14) axial aufeinander folgend angeordnet sind, wobei eine Kohlenwasserstoff-Einleitbaugruppe (78) zum Einleiten von Kohlenwasserstoff (K) in in dem Strömungspfad (14) strömendes Abgas (A) vorgesehen ist, wobei die Kohlenwasserstoff-Einleitbaugruppe (78) eine Kohlenwasserstoff-Abgabeeinheit (80) zum Abgeben von Kohlenwasserstoff (K) in den Strömungspfad (14) stromabwärts der wenigstens einen ersten Abgasbehandlungseinheit (68) und stromaufwärts der Abgasbehandlungsbaugruppe (62) und eine Drallstrom-Erzeugungseinheit (82) in dem Strömungspfad (14) stromaufwärts der Kohlenwasserstoff-Abgabeeinheit (80) umfasst.

2. Abgasbehandlungsanordnung nach Anspruch 1, **dadurch gekennzeichnet, dass** das die Kohlenwasserstoff-Abgabeeinheit (80) an einem Strömungspfadgehäuse (16) axial zwischen einem Austrittsbereich (84) der wenigstens einen ersten Abgasbehandlungseinheit (68) und einem Eintrittsbereich (90) der Abgasbehandlungsbaugruppe (62) getragen ist.

3. Abgasbehandlungsanordnung nach Anspruch 1 oder 2, **dadurch gekennzeichnet, dass** die Kohlenwasserstoff-Abgabeeinheit (80) zur Abgabe von Kohlenwasserstoff (K) mit einer zur Strömungspfad-Längsachse (L₂) im Wesentlichen orthogonalen oder einer bezüglich der Strömungspfad-Längsachse (L₂) im Wesentlichen tangential orientierten Haupt-Abgaberichtung (H₂) angeordnet ist.

4. Abgasbehandlungsanordnung nach einem der Ansprüche 1-3, **dadurch gekennzeichnet, dass** die Drallstrom-Erzeugungseinheit (82) eine Mehrzahl von Strömungsablenkelementen (86) umfasst, vorzugsweise wobei die Strömungsablenkelemente (86) in Umfangsrichtung um die Strömungspfad-Längsachse (L₂) aufeinander folgend angeordnet sind oder/und die Strömungsablenkelemente (86) bezüglich der Strömungspfad-Längsachse (L₂) sich im Wesentlichen radial erstreckend angeordnet sind, oder/und dass die Strömungsablenkelemente (86) in einer sternartigen Konfiguration angeordnet sind.

5. Abgasbehandlungsanordnung nach Anspruch 4, **dadurch gekennzeichnet, dass** die Drallstrom-Erzeugungseinheit (82) einen an dem Strömungspfad getragenen, ringartigen Körper (88) umfasst und die Strömungsablenkelemente (86) in ihrem radial äußeren Endbereich an den ringartigen Körper (88) anschließen, oder/und dass die Strömungsablenkelemente (86) in ihrem radial inneren Endbereich aneinander anschließen, oder/und dass die Drallstrom-Erzeugungseinheit (82) als Blechumformteil ausgebildet ist.

6. Abgasbehandlungsanordnung nach einem der Ansprüche 1-5, **dadurch gekennzeichnet, dass** die Drallstrom-Erzeugungseinheit (82) an einem Austrittsbereich (84) der wenigstens einen ersten Abgasbehandlungseinheit (68) angeordnet ist.

7. Abgasbehandlungsanordnung nach einem der Ansprüche 1-6, **dadurch gekennzeichnet, dass** stromabwärts der Abgasbehandlungsbaugruppe (62) wenigstens eine zweite Abgasbehandlungseinheit (40, 42) angeordnet ist.

8. Abgasbehandlungsanordnung nach Anspruch 7, **dadurch gekennzeichnet, dass** stromabwärts der Abgasbehandlungsbaugruppe (62) und stromaufwärts der wenigstens einen zweiten Abgasbehandlungseinheit (40, 42) eine Abgas/Reaktionsmittel-Mischstrecke (26) mit einem im Wesentlichen in Richtung einer Mischstrecken-Längsachse (L₃) langgestreckten Mischkanal (30) und einer Reaktionsmittel-Abgabeeinheit (34) zum Abgeben von Reaktionsmittel (R) in den Mischkanal (30) vorgesehen ist.

9. Abgasbehandlungsanordnung nach Anspruch 8, **dadurch gekennzeichnet, dass** die Mischstrecken-Längsachse (L₃) im Wesentlichen parallel zur Strömungspfad-Längsachse (L₂) ist, oder/und dass der Strömungspfad (14) und die Abgas/Reaktionsmittel-Mischstrecke (26) einander in axialer Richtung im Wesentlichen vollständig überlappen, so dass ein Eintrittsbereich (58) der Abgas/Reaktionsmittel-Mischstrecke (26) in Richtung der Mischstrecken-Längsachse (L₃) im Wesentlichen im gleichen axialen Bereich positioniert ist, wie ein Austrittsbereich (60) der Abgasbehandlungsbaugruppe (62), und ein Austrittsbereich (64) der Abgas/Reaktionsmittel-Mischstrecke (26) in Richtung der Mischstrecken-Längsachse (L₃) im Wesentlichen im gleichen axialen Bereich positioniert ist, wie ein Eintrittsbereich (66) der wenigstens einen ersten Abgasbehandlungseinheit (68).

10. Abgasbehandlungsanordnung nach Anspruch 8 oder 9, **dadurch gekennzeichnet, dass** eine Abgas-Hauptströmungsrichtung (H₄) im Mischkanal (30) im Wesentlichen entgegengesetzt gerichtet ist zu einer Abgas-Hauptströmungsrichtung (H₁) im Strömungspfad (14).

11. Abgasbehandlungsanordnung nach einem der Ansprüche 7-10, **dadurch gekennzeichnet, dass** die wenigstens eine zweite Abgasbehandlungseinheit (40, 42) in Richtung einer zur Strömungspfad-Längsachse (L₂) im Wesentlichen parallelen Abgasbehandlungseinheit-Längsachse (L₄, Ls) langgestreckt ist und im Wesentlichen in Richtung der Abgasbehandlungseinheit-Längsachse (L₄, Ls) durchströmbar ist, und dass die wenigstens eine zweite Abgasbehandlungseinheit (40, 42) und die Abgas/Reaktionsmittel-Mischstrecke (26) einander in axialer Richtung im Wesentlichen vollständig überlappen, so dass der Eintrittsbereich (58) der Abgas/Reaktionsmittel-Mischstrecke (26) in Richtung der Mischstrecken-Längsachse (L₃) im Wesentlichen im gleichen axialen Bereich positioniert ist, wie ein Austrittsbereich (52, 54) der wenigstens einen zweiten Abgasbehandlungseinheit (40, 42), und der Austrittsbereich (64) der Abgas/Reaktionsmittel-Mischstrecke (26) in Richtung der Mischstrecken-Längsachse (L) im Wesentlichen im gleichen axialen Bereich positioniert ist, wie ein Eintrittsbereich (48, 50) der wenigstens einen zweiten Abgasbehandlungseinheit (40, 42), vorzugsweise wobei der Eintrittsbereich (58) der Abgas/Reaktionsmittel-Mischstrecke (26) über ein erstes Strömungsumlenkgehäuse (24) mit dem Austrittsbereich (60) der Abgasbehandlungsbaugruppe (62) verbunden ist und der Austrittsbereich (64) der Abgas/Reaktionsmittel-Mischstrecke (26) über ein zweites Strömungsumlenkgehäuse (38) mit dem Eintrittsbereich (48, 50) der wenigstens einen zweiten Abgasbehandlungseinheit (40, 42) verbunden ist.

12. Abgasbehandlungsanordnung nach Anspruch 11, **dadurch gekennzeichnet, dass** wenigstens zwei zueinander parallel durchströmbare zweite Abgasbehandlungseinheiten (40, 42) quer zur Abgasbehandlungseinheit-Längsachse (L₄, Ls) nebeneinander und einander in Richtung der Abgasbehandlungseinheit-Längsachse (L₄, Ls) im Wesentlichen vollständig überlappend vorgesehen sind.

13. Abgasbehandlungsanordnung nach einem der Ansprüche 1-12, **dadurch gekennzeichnet, dass** wenigstens eine Abgasbehandlungseinheit (68, 40, 42) wenigstens eine SCR-Katalysatoreinheit (70, 98, 100) oder/und wenigstens eine Ammoniaksperrkatalysatoreinheit (72) umfasst, oder/und dass die Abgasbehandlungsbaugruppe (62) eine Oxidationskatalysatoreinheit (74) oder/und eine Partikelfiltereinheit (76) umfasst.

14. Abgasbehandlungsanordnung nach einem der Ansprüche 1-13, **dadurch gekennzeichnet, dass** im Strömungspfad (14) stromabwärts der Kohlenwasserstoff-Abgabeeinheit (80) und stromaufwärts der Abgasbehandlungsbaugruppe (62) ein Strömungsverteilungselement (92) angeordnet ist,
vorzugsweise wobei der Strömungsverteilungselement (92) plattenartig ausgebildet ist und einen Eintrittsbereich (90) der Abgasbehandlungsbaugruppe (62) im Wesentlichen vollständig überdeckt, wobei in dem Strömungsverteilungselement (92) eine Vielzahl von, vorzugsweise mit im Wesentlichen gleichem Querschnitt ausgebildeten und über das Strömungsverteilungselement (92) im Wesentlichen gleichmäßig verteilten, Strömungsdurchtrittsöffnungen (94) vorgesehen ist.

15. Abgasanlage für eine Brennkraftmaschine, insbesondere Diesel-Brennkraftmaschine, umfassend wenigstens eine Abgasbehandlungsanordnung (10) nach einem der Ansprüche 1-14.
